# EUROPÄISCHE PATENTSCHRIFT

(11) **EP 2 401 581 B1**
(45) Veröffentlichungstag und Bekanntmachung des Hinweises auf die Patenterteilung: **11.05.2016**
(21) Anmeldenummer: 10705341.5
(22) Anmeldetag: 22.02.2010
(51) Int. Cl.: G01C 19/56, G01C 19/5747

(54) **MIKRO-GYROSKOP ZUR ERMITTLUNG VON ROTATIONSBEWEGUNGEN UM EINE X- UND/ODER Y- SOWIE Z-ACHSE**
MICROGYROSCOPE FOR DETERMINING ROTATIONAL MOVEMENTS ABOUT AN X AND/OR Y AND Z AXIS
MICROGYROSCOPE DESTINÉ À DÉTERMINER DES MOUVEMENTS ROTATIFS AUTOUR D'AXES X ET/OU Y ET Z

(30) Priorität: 27.02.2009 DE 102009001244
(43) Veröffentlichungstag der Anmeldung: 04.01.2012
(73) Patentinhaber: Maxim Integrated GmbH, 8403 Lebring (AT)
(72) Erfinder: KEMPE, Volker, A-8501 Lieboch (AT)
(74) Vertreter: Bergmeier, Werner
(86) Internationale Anmeldenummer: PCT/EP2010/052179
(87) Internationale Veröffentlichungsnummer: WO 2010/097356

(56) Entgegenhaltungen:
- EP-A1- 1 832 841
- WO-A1-2009/156485

## Beschreibung

Die vorliegende Erfindung betrifft ein Mikro-Gyroskop zur Ermittlung von Rotationsbewegungen um eine x-, y- oder z-Achse, mit einem Substrat, mit mehreren oszillierenden Massen, mit Federn zum Befestigen der oszillierenden Massen an dem Substrat und mit Antriebselementen zum oszillierenden Schwingen zumindest einzelner der Massen in radialer Richtung zu einem zentralen Anker in der x-, y-Ebene, um bei einer Drehung des Substrates Corioliskräfte zu erzeugen und mit Sensorelementen, um Auslenkungen der Massen insbesondere aufgrund der erzeugten Corioliskräfte zu erfassen.

Mikro-elektro-mechanische (MEMS)-Gyroskope werden in der Regel zur Ermittlung einer Drehbewegung um eine Achse in einem x-y-z-Koordinaten-system verwendet. Um Drehbewegungen des Systems um jede der drei Achsen ermitteln zu können, sind daher drei derartige Mikro-Gyroskope erforderlich. Dies ist kostenintensiv und aufwändig in der Steuerung bzw. Auswertung der Daten.

Um ein dreidimensionales Gyroskop schaffen zu können, bei welchem Drehungen in allen drei Achsen festgestellt werden können, hat D. Wood et al. in dem Artikel "A monolithic silicone gyroscope capable of sensing about three axes simultaneously" 1996 vorgeschlagen, ein Gyroskop zu schaffen, welches ringförmig um einen zentralen Anker angeordnete oszillierende Massen aufweist, welche sowohl Kipp- als auch Drehbewegungen aufgrund auftretender Corioliskräfte feststellen kann. Nachteilig hierbei ist, dass die Fertigung eines solchen Sensors ebenso wie der Antrieb der bewegten Massen schwierig bzw. nicht realisierbar ist. Die Ausführungen von D. Wood et al. blieben daher lediglich theoretischer Art.

In dem Artikel "Design and dynamics of an innovative micro-gyroscope against coupling effects" von Nan-Chyuan Tsai wurde ebenfalls ein 3D-Gyroskop vorgeschlagen. Nachteilig hierbei ist, dass eine innere Platte und ein äußerer Ring sowie vier bewegte Massen vorhanden sind. Die geforderten Federkonstruktionen mit geringer Steifigkeit in zwei orthogonalen Drehrichtungen sind toleranzanfällig und schwer zu realisieren.

Aus der EP 1 832 841 A1 ist ein Mikro-Gyroskop zur Ermittlung von Rotationsbewegungen bekannt, bei dem sich Massen einerseits innerhalb der x-y-Ebene und andererseits aus der x-y-Ebene heraus als Reaktion auf eine Corioliskraft bewegen können. Um Auslenkungen der Massen insbesondere aufgrund der erzeugten Corioliskräfte zu erfassen sind Sensorelemente vorgesehen. Die Massen sind mittels Federn an einer Antriebsmasse befestigt, die rotatorisch um einen zentralen Anker angetrieben ist.

In der nachveröffentlichten WO 2009/156485 A1 ist ebenfalls ein Mikro-Gyroskop zur Ermittlung von Rotationsbewegungen offenbart. Alle Massen sind für die Primärbewegungen und die Sekundärbewegungen miteinander gekoppelt, so dass sich Überlagerungen insbesondere der verschiedenen Sekundärbewegungen ergeben. Sowohl der konstruktive Aufbau des Gyroskops als auch die Auswertung der Sekundärbewegungen ist daher aufwändig und kann ungenau sein.

Aufgabe der vorliegenden Erfindung ist es, einen zu vertretbaren Kosten herstellbaren 3d-Mikro-Gyrosensor mit hoher Erfassungsgenauigkeit zu schaffen, der die genannten Unzulänglichkeiten vermeidet.

Die Aufgabe wird gelöst mit einem Mikro-Gyroskop mit den Merkmalen des Anspruches 1.

Das erfindungsgemäße Mikro-Gyroskop weist ein Substrat, mit Federn an dem Substrat befestigte oszillierende Massen, Antriebselemente sowie Sensorelemente auf. Zumindest einzelne der oszillierenden Massen sind in zwei Gruppen angeordnet, wobei die Massen beider Gruppen durch Antriebselement gemeinsam zu einer oszillierenden Primärbewegung in der Ebene der x-, y-Achse angeregt werden können. Die Massen der ersten Gruppe sind derart auf dem Substrat angeordnet, dass ihnen Bewegungen aus der x-/y-Ebene ermöglicht sind. Die Massen der zweiten Gruppe sind derart auf dem Substrat angeordnet, dass ihnen Bewegungen senkrecht zu der oszillierenden Primärbewegung in der Ebene der x-/y-Achse ermöglicht sind. Die einzelnen Massen sind somit in ihren Funktionen in die beiden Gruppen unterteilt, wobei die Massen der ersten Gruppe durch die bei einer Drehung des Substrates auftretenden Corioliskräfte aus der x-/y-Ebene herausbewegt werden. Dies erfolgt dann, wenn das Substrat bzw. das Gyroskop um die x-oder die y-Achse gedreht wird. Als Reaktion dieser Drehbewegung des Substrates wird eine Corioliskraft erzeugt, welche die Massen der ersten Gruppe aus der x-/y-Ebene herausbewegt. Je nach Lagerung dieser Massen der ersten Gruppe werden diese Massen um die x- und/oder y-Achse gekippt bzw. gedreht. Bei einer andersartigen Aufhängung dieser Massen kann auch eine translatorische Bewegung in z-Richtung erfolgen. Die Massen der zweiten Gruppe reagieren auf eine Drehbewegung des Substrates bzw. Gyroskops um die z-Achse als Reaktion auf die entstehende Corioliskraft und werden als Sekundärbewegung innerhalb der Ebene der x-/y-Achse bewegt. Diese Bewegung kann wiederum je nach Aufhängung der Massen der zweiten Gruppe rotierend um die z-Achse sein oder eine translatorische Bewegung innerhalb der x-/y-Ebene bewirken.

Die erfindungsgemäße Ausgestaltung des Mikro-Gyroskops hat den Vorteil, dass die einzelnen Massen aufgeteilt sind auf die jeweiligen Sekundärbewegungen, welche als Reaktion der Corioliskraft gemessen werden sollen. Durch die Aufteilung der Massen ist die Gestaltung der Federn, mit welchen diese Massen befestigt sind, relativ einfach möglich. Überlagerungen von Bewegungen, d.h. das gleichzeitige Bewegen der Massen sowohl in radialer als auch um eine der Drehachsen in der Ebene und gleichzeitig um die z-Achse, wie sie bei anderen Ausführungen von 3D-Mikro-Gyrosensoren bekannt sind, sind bei der erfindungsgemäßen Ausführung nicht notwendig. Federn, die teilweise gleichzeitig genau vorgegebene Elastizitäten in mehr als einer Dreh- oder Biegerichtung aufweisen müssen, sind nicht erforderlich. Kopplungen zwischen den einzelnen Bewegungsrichtungen und damit verbundene Kreuzkopplungsfehler werden vermieden. Die einzelnen Massen können so gelagert werden, dass sie bereits auf geringe Corioliskräfte ansprechen. Der Sensor kann hierdurch sehr schnell und genau auf Drehbewegungen reagieren.

Die Massen beider Gruppen sind für die oszillierende Primärbewegung radial zu einem zentralen Punkt des Substrates bewegbar. Hierdurch kann die Baugröße des Sensors klein gehalten werden. Außerdem kann die Primärbewegung der einzelnen Massen derart eingeleitet werden, dass keine Unwuchten entstehen. Die Bewegungen und die dadurch auftretenden Kräfte und Drehmomente gleichen einander aus, so dass die Primärbewegung keine unbeabsichtigte Sekundärbewegung erzeugt, welche die Messergebnisse verfälschen würde.

In einer vorteilhaften Ausführung der Erfindung sind die Massen der ersten und der zweiten Gruppe zur synchronisierten oszillierenden Primärbewegung steif in radialer Richtung und elastisch in tangentialer Richtung miteinander verbunden. Diese Verbindung kann mittels Synchronisierfedern erfolgen, welche zwischen den Massen der ersten und der zweiten Gruppe angeordnet sind. Durch diese Synchronisierfedern wird bewirkt, dass die einzelnen Massen, insbesondere wenn sie radial in Bezug auf das Zentrum des Sensors oszillierend hin und her bewegt werden, gleichmäßig pulsierend angetrieben werden können. Ein Phasenversatz der einzelnen angetriebenen Massen wird hierdurch weitgehend vermieden. Das System arbeitet dadurch synchron und ohne dass unerwünschte Kräfte oder Drehmomente auftreten.

In einer besonders vorteilhaften Ausgestaltung der Erfindung sind die Massen der ersten Gruppe zwei Paare von Massen, von denen jeweils ein Paar auf der x-Achse und das zweite Paar auf der y-Achse angeordnet ist. Auch hierdurch entsteht ein ausgeglichenes System, welches besonders einfach hinsichtlich auftretender Sekundärbewegungen zu analysieren ist. Corioliskräfte als Reaktion auf Drehbewegungen des Substrates um die x- oder y-Achse erzeugen Kräfte in positiver und negativer z-Richtung und damit Kippmomente sowie die entsprechenden Sekundärbewegungen der Massenpaare um die y- bzw. x Achse, so dass an den entsprechenden Massen angeordnete Sensorelemente deren Sekundärbewegung sehr einfach erfassen können. Aus den elektrischen Signalen dieser Sensorelemente können Rückschlüsse auf die Drehbewegung des Substrates um die x- oder y-Achse gezogen werden.

Besteht die zweite Gruppe aus mindestens zwei Massen oder vorzugsweise einem Vielfachen davon, so wird auch hierdurch gewährleistet, dass das System durch die Primär- oder Sekundärbewegungen keine Drehmomente erzeugt, welche die Messergebnisse verfälschen könnten.

In einer besonders vorteilhaften Anordnung befinden sich die Massen der zweiten Gruppe zwischen den Massen der ersten Gruppe und sind insbesondere jeweils um 90° versetzt angeordnet. Die Massen der ersten Gruppe befinden sich dabei vorzugsweise auf der x-Achse bzw. y-Achse, während die Massen der zweiten Gruppe um jeweils 45° versetzt zwischen der x- und der y-Achse angeordnet sind. Corioliskräfte aufgrund einer Drehung des Substrates um die x- oder y-Achse bewirken hierbei vorzugsweise ebenfalls eine Kippbewegung der Massen der ersten Gruppe
auf der x- bzw. y Achse um die y- bzw. x Achse während eine Rotation des Substrates um die z-Achse senkrecht zur radialen Primärbewegung liegende Corioliskräfte erzeugen, die auf die Massen der zweiten Gruppe einwirken. Diese können je nach Ausgestaltung in eine Bewegung der Massen der zweiten Gruppe in Form einer Rotation um die z-Achse oder in Form einer in der Ebene liegenden Bewegung senkrecht zur Radialbewegung umgewandelt und erfasst werden. Die auftretenden Corioliskräfte und die dadurch bewirkte Auslenkung der jeweiligen Massen sind so unabhängig voneinander relativ einfach mittels Sensorelementen, welche den jeweiligen Massen zugeordnet sind, zu ermitteln. Überlagerungen der Bewegungen der einzelnen Elemente, welche rechnerisch separiert werden müssten und komplizierte Aufhängungen der einzelnen Massen sind hierdurch nicht notwendig.

Vorzugsweise sind die Massen der ersten Gruppe in x- und/oder y-Richtung flexibel an einem inneren und/oder einem äußeren Rahmen angeordnet. Die Massen der ersten Gruppe sind hierdurch einerseits stabil aufgehängt und andererseits dennoch in der Lage, in vorbestimmter Weise beweglich zu sein. Insbesondere für den Antrieb der Massen der ersten Gruppe, welche bei einer vorzugsweisen Ausbildung der Erfindung in x-Richtung bzw. in y-Richtung erfolgt, ist diese Primärbewegung durch die entsprechende flexible Befestigung der Massen der ersten Gruppe an einem inneren und äußeren Rahmen besonders einfach zu realisieren. Die Federn, mit welchen die Massen der ersten Gruppe an dem inneren bzw. äußeren Rahmen angeordnet sind, können sehr einfach gestaltet werden, da sie Flexibilität nur in einer Richtung aufweisen müssen und in den anderen Richtungen starr sind.

Besonders einfach ist die Befestigung der Massen der ersten Gruppe, wenn diese in radialer Richtung flexibel an einer starren Strebe oder einem Hilfssteg angeordnet sind. Durch die Strebe oder den Hilfssteg kann beispielsweise die Verbindung mit dem inneren oder äußeren Rahmen erfolgen. Die Massen der ersten Gruppe können hierdurch so gestaltet werden, dass sie bzgl. ihrer Masse und ihrer Form optimal in den Sensor integriert werden können.

Ist der innere Rahmen an einem oder mehreren im Wesentlichen zentralen Anker/n angeordnet, so kann in einer vorteilhaften Ausführung der Erfindung die Flexibilität der Massen der ersten Gruppe, welche an dem inneren Rahmen befestigt sind und welche in radialer Richtung vorhanden sein soll, entkoppelt werden von einer Drehbewegung, welche als Sekundärbewegung den inneren Rahmen in Bezug auf den zentralen Anker bewegt. Die einzelnen Federn sind hierdurch relativ einfach zu gestalten, da die Federn für die Massen der ersten Gruppe lediglich in einer Richtung flexibel sein müssen und andererseits die Federn, welche den inneren Rahmen an dem zentralen Anker befestigen, ebenfalls nur in einer Richtung flexibel gestaltet sein müssen. Durch diese klare Gestaltung der Federn mit Eigenschaften, welche sich nicht widersprechen und welche eine Flexibilität jeweils nur in einer Richtung erfordern, können klare Bewegungen ohne Kreuzkopplungseffekte erzeugt werden. Die Messergebnisse der Sensorelemente, welche die Bewegungen der einzelnen Elemente bzw. Massensysteme erfassen, können hierdurch eindeutig ermittelt und ausgewertet werden.

Insbesondere wenn der innere und/oder äußere Rahmen kardanisch an einem oder mehreren Anker/n zur Kippbewegung der Massen der ersten Gruppe um die x- oder y-Achse gelagert ist, ist es möglich, dass die an dem Rahmen befestigten Massenpaare drehbar um die y-Achse als auch um die x-Achse als Reaktion auf Corioliskräfte ausgelenkt werden können. Auch hierdurch ist eine Entkopplung der einzelnen Bewegungsrichtungen möglich, wodurch die Auswertung der Bewegungen sehr einfach und genau erfolgen kann.

Eine besonders genaue Auswertung der Sekundärbewegungen kann dadurch erfolgen, dass gemäß einer vorteilhaften Ausführung der Erfindung die kardanische Lagerung des inneren und äußeren Rahmens flexibel um die gleichen Kippachsen ist, aber gegenüber linearen Bewegungen weitgehend unbeweglich ist. Hierdurch wird ein eindeutiges System erzeugt, welches Bewegungen jeweils nur in einer Drehrichtung zulässt. Lineare Bewegungen, welche die Drehbewegungen überlagern würden und somit die Auswertung der Bewegungen erschweren oder gar verfälschen würden, werden hierdurch vermieden.

Um eine Drehbewegung des Gyroskops um die z-Achse feststellen zu können, ist es vorteilhaft, wenn zumindest Teile der Massen der zweiten Gruppe drehbar um die z-Achse oder senkrecht zur radialen Anordnung der Massen der zweiten Gruppe auslenkbar gelagert sind. Hierdurch ist eine Reaktion auf auftretende Corioliskräfte und eine Bewegung der Massen der zweiten Gruppe um die z-Achse oder in translatorischer Richtung senkrecht auf die radiale Anordnung der Massen der zweiten Gruppe analysierbar. Entsprechend angeordnete Sensorelemente stellen die Sekundärbewegung der Massen der zweiten Gruppe fest und erzeugen ein elektrisches Signal, welches proportional zur Drehbewegung des Substrates des Gyroskops ist.

Besonders vorteilhaft kann das Mikro-Gyroskop gestaltet werden, wenn die Massen der zweiten Gruppe einen oszillierenden Rahmen, bei dem die Sekundärbewegung unterdrückt wird, aufweisen, mit welchem eine Unterteilmasse verbunden ist, die die Primärbewegungen des Rahmens übernimmt und zusätzlich die Sekundärbewegungen ausführen kann. Hierdurch werden die einzelnen Bewegungsrichtungen wiederum entkoppelt. Die Primärbewegung der Massen der zweiten Gruppe erfordert eine flexible Aufhängung des Rahmens auf dem Substrat in der Antriebsrichtung, während in den anderen Richtungen die Aufhängung weitgehend starr ist.

Ist in einer vorteilhaften Ausführung der Erfindung sind die Unterteilmasse an dem oszillierenden Rahmen derart befestigt, dass die Unterteilmasse senkrecht zur oszillierenden Bewegung des Rahmens auslenkbar ist, so ist die Sekundärbewegung lediglich auf die Unterteilmasse einleitbar. Die Bewegung der Unterteilmasse senkrecht zur oszillierenden Antriebsbewegung kann damit relativ einfach erfasst werden und ausgewertet werden. Auch hierdurch ist wiederum die einfache Gestaltung der elastischen Aufhängung von Rahmen und Unterteilmasse ermöglicht. Die einzelnen Federn, mit welchen der Rahmen und die Unterteilmasse an den jeweiligen übergeordneten Bauteilen befestigt sind, müssen jeweils nur in einer Richtung flexibel sein. In den anderen Richtungen können sie starr ausgebildet sein. Die Gestaltung der Federn ist hierdurch einfach und eindeutig hinsichtlich ihrer Freiheitsgrade zu realisieren.

Vorzugsweise sind erste Sensorelemente zum Erfassen der Auslenkung der oszillierenden Massen der ersten Gruppe unterhalb der oszillierenden Massen angeordnet. Es kann sich hierbei beispielsweise um Plattenkondensatoren handeln, welche horizontal angeordnet sind und welche durch eine Änderung des Abstandes der einzelnen Platten ein veränderliches elektrisches Signal erzeugen. Hierdurch wird die Auslenkung der oszillierenden Massen der ersten Gruppe erfasst und Rückschlüsse auf eine entsprechende Drehbewegung des Mikro-Gyroskops sind möglich. Selbstverständlich können auch andersartige Sensorelemente zum Einsatz kommen. Beispielsweise können auch horizontal angeordnete Elektroden ein entsprechendes Signal bzgl. einer Auslenkung der oszillierenden Massen der ersten Gruppe erzeugen.

Um die Auslenkung der Massen oder der Unterteilmassen der zweiten Gruppen zu erfassen, ist es vorteilhafterweise möglich, dass zweite Sensorelemente angeordnet sind, welche diese Bewegung der Massen bzw. Unterteilmassen erfassen. Auch hierbei ist es vorteilhaft, wenn die Sensorelemente ebenso wie bei den Massen der ersten Gruppe aufgeteilt sind. Ein Teil der Sensorelemente ist fest an dem Substrat angeordnet, während ein anderer Teil an der beweglichen Masse sich befindet. Durch eine Relativbewegung der beiden Teile der Sensorelemente zueinander wird ein veränderliches elektrisches Signal erzeugt, welches auf die Bewegung der Massen hindeutet.

Zur Bewegung der oszillierenden Massen der ersten und der zweiten Gruppe ist es vorteilhaft, wenn Elektroden, insbesondere Gabelelektrodenpaare, vorgesehen sind. Durch eine daran angelegte Wechselspannung werden die Massen wechselseitig in radialer Richtung hin zur zentralen Aufhängung bzw. weg von ihr angezogen und treten so in eine oszillierende Bewegung ein.

Eine besonders vorteilhafte Ausführung des Mikro-Gyroskops ist im Folgenden beschrieben.

Vorteilhaft ist es hierbei, dass an der zentralen Aufhängung, die um zwei Kippachsen beweglich an einem zentralen Anker angebracht ist, zwei Gruppen von oszillierende Massen so angebracht sind, dass sie gemeinsam und synchronisiert zu einer radialen Primärbewegung angeregt werden und dass die mindestens zwei paarweise angeordneten Teilmassen der ersten Gruppe der oszillierenden Massen durch Kippbewegungen um in der Ebene liegende Achsen auf Drehungen des Sensors um in der Ebene liegende Achsen reagiert und die zweite Gruppe der Massen oder Teile dieser Bewegungen senkrecht zur radialen Auslenkung als Reaktion auf durch Drehungen um die z-Achse erzeugten Corioliskräfte ausführen kann.

Im einfachsten und bevorzugten Fall besteht die erste Gruppe von Massen aus vier, jeweils um 90° gegeneinander verschobene Plattensegmenten, von denen die jeweils gegenüberliegende ein Paar zur Detektion der Rotation um die x-Achse bzw. um die y-Achse bilden, und die zweite Gruppe ebenfalls aus vier, jeweils um 90° gegeneinander verschobene Plattensegmenten, die gemeinsam die durch die z-Rotation senkrecht zum Radius hervorgerufenen Auslenkungen erfassen.

Eine möglicherweise zu verwendende zweite äußere Aufhängung für die bewegten Massen ist wie auch die zentrale Aufhängung flexibel um die gleichen Kippachsen wie die innere Aufhängung, gegenüber linearen Bewegungen aber unbeweglich und dient der Erhöhung der Shock- und Vibrationsfestigkeit des Gyroskops.

Die Erfassung der Auslenkungen durch die Corioliskräfte erfolgt durch Sensorelemente, welche den oszillierenden Massen zugeordnet sind. Es werden damit lineare Auslenkbewegungen und/oder Kippbewegungen der Massen erfasst. Die innere Aufhängung kann verschieden ausgeführt werden. Wesentlich ist, dass die oszillierenden Massen der ersten Gruppe einerseits eine radiale Bewegung weg von und hin zu der zentralen Aufhängung durchführen können, was durch entsprechende elastische Verbindungen zur zentralen Aufhängung oder erfindungsgemäß durch elastische Verbindungen zu starren Streben oder Hilfsstegen, die starr mit der zentralen Aufhängung verbunden sind, erreicht wird, und andererseits auch jeweils paarweise eine von den zwei orthogonalen Kippbewegungen um den zentralen Anker ausführen können.

Die Massen der zweiten Gruppe sind elastisch mit dem Substrat und über Synchronisationsfedern mit den jeweils benachbarten Massen der ersten Teilgruppe verbunden, so dass einerseits ihre Primäroszillation synchron mit allen anderen Massen erfolgt, andererseits die Massen zusätzlich zur Radialbewegung eine dazu senkrechte Bewegung ausführen können.

Eine vorteilhafte Gestaltungsmöglichkeit besteht dabei darin, dass jede der Teilmassen der zweiten Gruppe in einen radial oszillierenden Rahmen und eine damit verbundene Unterteilmasse aufgegliedert ist, wobei letztere die durch die Corioliskraft der z-Rotation bedingte, senkrecht zum Radius verlaufende Sekundärbewegung ausführen kann. In diesem Falle ist die Dimensionierung der Synchronisationsfedern besonders einfach, da diese nur eine definierte Elastizität in Kipprichtung aufweisen, in allen anderen Freiheitsgraden jedoch möglichst steif sein müssen.

Durch die geschilderte Anordnung ist es einerseits möglich, dass die oszillierenden Massen als Antriebsmassen einsetzbar sind und andererseits Bewegungen aufgrund der Corioliskräfte auf die entsprechenden Massen übertragen werden können. Damit ist es möglich, Drehungen des Gyroskops, d.h. insbesondere des Substrats, um eine x-, y- oder z-Achse zusammen mit den jeweils zugeordneten Sensorelementen feststellen zu können.

Vorzugsweise und nicht einschränkend sind die Sensorelemente zum Erfassen der Auslenkung der oszillierenden Massen der ersten Gruppe entsprechend dem Stand der Technik unterhalb der oszillierenden Massen, d.h. zwischen den oszillierenden Massen und dem Substrat angeordnet. Die Sensorelemente können dabei, wenn sie beispielsweise kapazitiver Art sind, durch Änderung der Spannungen eine Auslenkung der oszillierenden Massen feststellen. Die Sensorelemente zum Erfassen einer Drehbewegung der Massen der zweiten Gruppe können entweder durch ebenfalls mit diesen Massen in Verbindung stehende kapazitive Sensoren oder durch andere gleichwertige Sensoren gebildet werden, welche eine Abstandsänderung in senkrecht zum Radius verlaufender Richtung feststellen.

Besonders vorteilhaft ist es, wenn die äußere Aufhängung die oszillierenden Massen als ein ringförmiger oder anders gestalteter Rahmen umgibt. Hierdurch ist gleichzeitig eine elastische Verbindung der oszillierenden Massen an ihrem äußeren Umfang an der äußeren Aufhängung in gleicher Weise wie an der inneren Aufhängung direkt oder über die starren Hilfsstege ermöglicht.

Da die äußere Aufhängung steif gegenüber lineare Auslenkungen in alle drei Richtungen mit dem Substrat verankert ist und nur Torsionsbewegungen um zwei Kippachsen ausführen kann, entsteht hierdurch ein besonders stabiles System, welches insbesondere gegenüber äußeren Schockeinflüssen robust ist.

Vorzugsweise ist der innere Anker zentral angeordnet. Dies erlaubt eine gute und gleichmäßige Auslenkung der Massen in radialer Richtung und für die Massen der ersten Gruppe gleichzeitig in einer der beiden Kippachsen.

In einer besonders vorteilhaften Ausgestaltung der Erfindung ist die zentrale Aufhängung in Form einer einfachen Kardanaufhängung ausgeführt, die eine Schwenkbewegung der Massenpaare der ersten Gruppe um die x- bzw. y-Achse erlaubt.

Um die oszillierenden Massen in radialer Richtung beweglich auszugestalten, ist es vorteilhaft, wenn die oszillierenden Massen der ersten Gruppe mittels Federn an der Zentralplatte direkt oder besonders vorteilhafterweise über die starren Hilfsstege an dieser befestigt sind. Gleiches gilt ggf. für die Befestigung an der äußeren Aufhängung, die ebenfalls vorteilhafterweise als Kardanaufhängung ausgeführt werden kann.

Um die oszillierenden Massen der zweiten Gruppe in radialer Richtung beweglich auszugestalten ist es vorteilhaft, diese selbst oder die Teilrahmen, die die senkrecht dazu beweglichen Unterteilmassen tragen, mittels in radialer Richtung elastischer Federn mit dem Substrat zu verbinden. Vorzugsweise sind die Federn derart ausgestaltet, dass sie so starr wie möglich in z-Richtung ausgeführt werden und damit eine Bewegung der oszillierenden Massen in z-Richtung vermeiden.

Um die oszillierenden Massen zu einer gemeinsamen, synchronen radialen Bewegung zu zwingen, ist es vorteilhaft, jeweils die Teilmassen der ersten und zweiten Gruppe abwechselnd entlang des Umkreises anzuordnen und diese durch Synchronisationsfedern, die in radialer Richtung möglichst starr ausgeführt sind, zu verbinden. Die Synchronisierfedern erlauben einerseits eine gewisse Elastizität in Umfangsrichtung um den Anker, um sicher zu stellen, dass die oszillierenden Massen sich bei ihrer linearen Radialbewegung etwas voneinander entfernen können. Andererseits behindern sie aber die oszillierenden Massen, sofern diese dazu neigen sollten, nicht gleichmäßig und gleichzeitig nach außen und innen zu schwingen.

Gemäß dem Stand der Technik sind zum Antrieb der oszillierenden Massen vorzugsweise Elektroden, insbesondere Gabel- oder Kammelektroden, vorgesehen. Diese Elektroden regen die oszillierenden Massen zur jeweiligen Schwingung an und bewirken eine gezielte Schwingung mit einer vorbestimmten Frequenz.

Gemäß einer besonders bevorzugten und erfinderischen Ausführung weist das Mikro-Gyroskop Sensorelemente zum Erfassen der Auslenkung der Massen (5) oder der Unterteilmassen (11) auf, die in einer Detektionsbox (23) mit Abschirmelektroden (25) für auf dem Substrat feststehende Gegenelektroden (24) angeordnet sind. Durch die Abschirmelektroden werden konstante Randfelder geschaffen, welche die Genauigkeit der Messung der Sekundärbewegungen ermöglichen.

Weitere Vorteile der Erfindung und weitere erfinderische Gedanken sind in der nachfolgenden Beschreibung von Ausführungsbeispielen dargelegt. Es zeigen:
- **Figur 1**: eine schematische Gestaltung einer möglichen Ausgestaltung der Erfindung, gleichzeitig das Arbeitsprinzip des Gyroskops,
- **Figur 2**: ein Ausführungsbeispiel für die Gestaltung der Massen der ersten Gruppe und ihre Aufhängung,
- **Figur 3**: ein Ausführungsbeispiel für die Gestaltung der Massen der zweiten Gruppe und ihre Aufhängung,
- **Figur 4**: ein Ausführungsbeispiel der inneren Aufhängung,
- **Figur 5**: ein Ausführungsbeispiel der kapazitiven Erfassung der z-Rotation,
- **Figur 6**: ein Detail der kapazitiven Erfassung der z-Rotation bzw. der entsprechenden Bewegung senkrecht zum Radius,
- **Figur 7**: ein weiteres Ausführungsbeispiel der Erfindung.

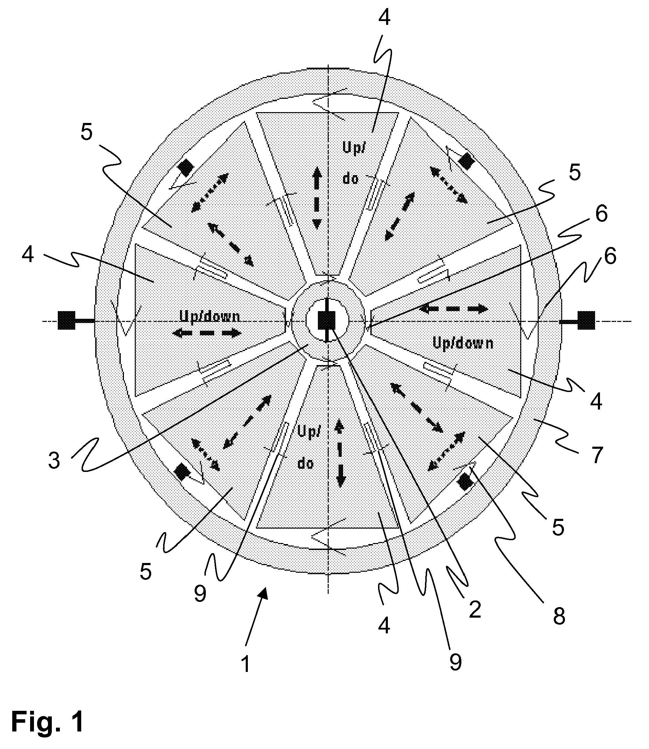

Figur 1 zeigt ein mögliches Ausführungsbeispiel eines erfindungsgemäßen Mikro-Gyroskops 1. In einem zentralen Anker 2, welcher an einem in der Zeichenebene liegenden Substrat befestigt ist, sind über eine diskusförmige innere Aufhängung 3 in Form eines inneren Rahmens acht oszillierende Antriebsmassen 4 und 5 angeordnet, die zwei Gruppen bilden, deren Repräsentanten jeweils um 90° gegeneinander versetzt sind. Die Massen 4 der ersten Gruppe sind mittels symbolhaft angedeuteten (Antriebs-)Federn 6 an der inneren Aufhängung 3 sowie an einer vorteilhafterweise vorzusehenden äußeren Aufhängung 7 befestigt, die jedoch auch weggelassen werden kann. Beide Aufhängungen 3 und 7 können auch andere als ringförmige Ausprägungen z.B. quadratische aufweisen.

Die Federn 6 der Massen 4 der ersten Gruppe sind in radialer Richtung elastisch und in allen anderen Freiheitsgraden möglichst steif. Die vier Massen 5 der zweiten Gruppe sind in diesem Ausführungsbeispiel mittels Federn 8 mit dem Substrat verbunden, wobei diese Federn 8 in radialer und dazu senkrechter Richtung elastisch und in allen anderen Freiheitsgraden möglichst steif sind.

Die Federn 6 der Massen 4 der ersten Gruppe ermöglichen damit eine durch entsprechende Antriebselemente erzeugte radiale Oszillation sowie die Übertragung der an den gegenüberliegenden Massen eines Paares gegenphasig auftretenden Corioliskräfte in Form eines Drehmomentes auf die innere und ggf. äußere Aufhängung 3, 7, die beide Kippbewegungen um die beiden orthogonalen Achsen x und y ausführen können. In Fig.1 ist symbolisch nur eine der beiden Kippachsen der Aufhängungen 3,7 dargestellt, und zwar die um die horizontale Kippachse.

Die mit dem Substrat verbundenen Federn 8 der Massen 5 der zweiten Gruppe ermöglichen ebenfalls eine durch entsprechende Antriebselemente erzeugte oder unterstützte radiale Oszillation, darüber hinaus zusätzlich eine orthogonale Bewegung quer zum Radius.

Alle acht Massen 4, 5 beider Gruppen werden durch Synchronisationsfedern 9 zu einer radialen Synchronoszillationsbewegung gezwungen. Die Synchronisationsfedern 9 gleichen nicht nur Ungleichheiten in den einzelnen Massen 4, 5 und Federkonstanten, sondern auch in der Größe der synchron einwirkenden Antriebskräfte aus. Die Antriebselemente, die vorteilhafterweise als Kammstrukturen ausgeführt werden können, sind hier nicht gezeigt.

Werden die Antriebsmassen 4 der ersten Gruppe paarweise durch in der Ebene liegende Drehungen mit antiparallelen Corioliskräften beaufschlagt, so erzeugen diese ein Drehmoment an der inneren Aufhängung 3 und damit entsprechende Kippbewegungen. Werden die Antriebsmassen 5 der zweiten Gruppe durch Drehungen um die z-Achse mit Corioliskräften beaufschlagt, so entstehen gleichsinnige Sekundäroszillationen aller vier Massen 5 senkrecht zur radialen Bewegung.

Die zwischen den acht Massen 4, 5 angeordneten Synchronisierfedern 9 sind derart ausgebildet, dass sie ein synchrones Schwingen der Antriebsmassen 4, 5 unterstützen. Sie erlauben somit eine gewisse Dehnung bei einer Vergrößerung des Spaltes zwischen zwei Antriebsmassen 4, 5 bei einem radial nach außen Wandern der Antriebsmassen 4, 5 und eine Verringerung des Spaltes, wenn die Antriebsmassen 4, 5 wieder Richtung Zentrum bewegt werden. Andererseits sind die Synchronisierfedern 9 steif, wenn die Antriebsmassen 4, 5 versuchen würden, ungleichmäßig zu oszillieren.

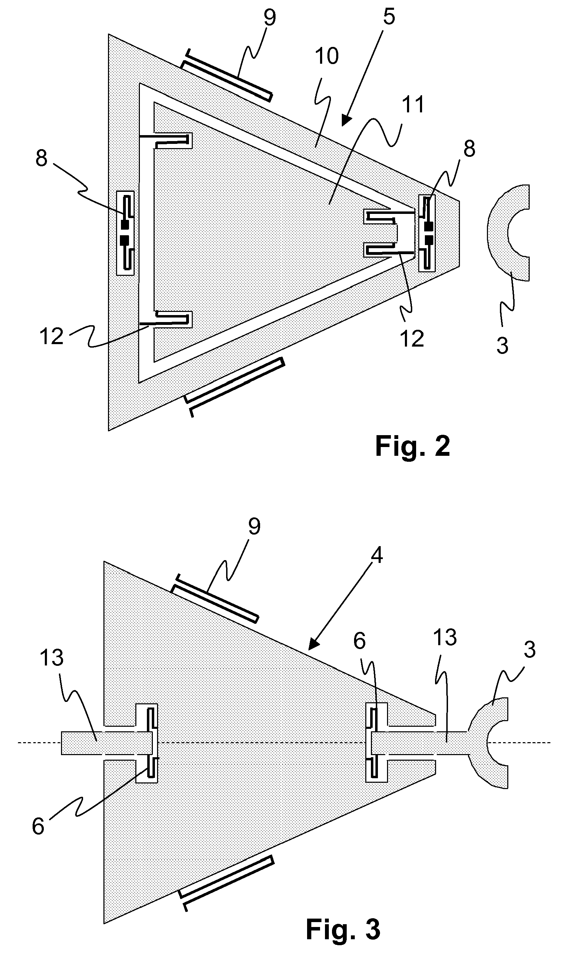

Im Falle der in Fig.1 gezeigten Ausführung der Massen 5 und Federn 8 der zweiten Gruppe wirken die Synchronisationsfedern 9 auch auf die Sekundärbewegung der Massen 5 der zweiten Gruppe. Dies wird durch die Ausführung der Massen 5 der zweiten Gruppe als getrennter Antriebsrahmen 10 und eingebetteter Teilmassen 11 gemäß Fig.2 vermieden. Die Teilmassen 11 sind mittels Sekundärbewegungsfedern 12 mit ihrem jeweiligen Antriebsrahmen verbunden. Dadurch wird auch eine saubere Trennung der Funktion der Antriebsfedern 8 und der Sekundärbewegungsfedern 12 erreicht und die bei Federkonstruktionen mit zwei Freiheitsgraden unvermeidlichen Kreuzkopplungen durch die Einführung von zwei Federpaaren 8, 12 mit jeweils einem gut kontrollierten Freiheitsgrad vermieden. Figur 2 zeigt eine vorteilhafte Ausführungsform der Massen 5 der zweiten Gruppe und ihrer Federgruppen 8 und 12.

Unterhalb der Massen 4 der ersten Gruppe und ggf. unter den entsprechenden Teilen der äußeren Aufhängung 7 sind Sensorelektroden angeordnet, welche eine Abstandsveränderung in z-Richtung feststellen können. Diese Sensorelektroden bestehen beispielsweise aus kapazitiv wirkenden Platten, welche eine Kippbewegung um eine der in der Zeichenebene liegenden Achsen x, y feststellen.

Fig. 3 zeigt eine vorteilhafte Ausführungsform der Massen 4 der ersten Gruppe und ihrer Federn 6. Besonders günstig ist die Einführung von Streben bzw. Hilfsstegen 13, die es gestatten, die in z-Richtung wirkenden Corioliskräfte effizient in ein Drehmoment zu transformieren. Der Einfluss der begrenzten Torsionssteifigkeit der Antriebsfedern 6, die bei Anordnung der Federn 6 zwischen den Massen 4 und der inneren Aufhängung 3 zu Verdrehungen beider gegeneinander führt, wird hier wesentlich reduziert und damit eine effiziente Transformation der Corioliskräfte in das Kippmoment erreicht.

Im Falle des Fehlens der äußeren Aufhängung 7 ist es günstig, die beiden Antriebsfedern 6 oder Antriebsfederpaare in der Nähe des inneren und äußeren Randes der Massen 4 mit einem entsprechend verlängerten Hilfssteg zur inneren Aufhängung 3 zu verbinden.

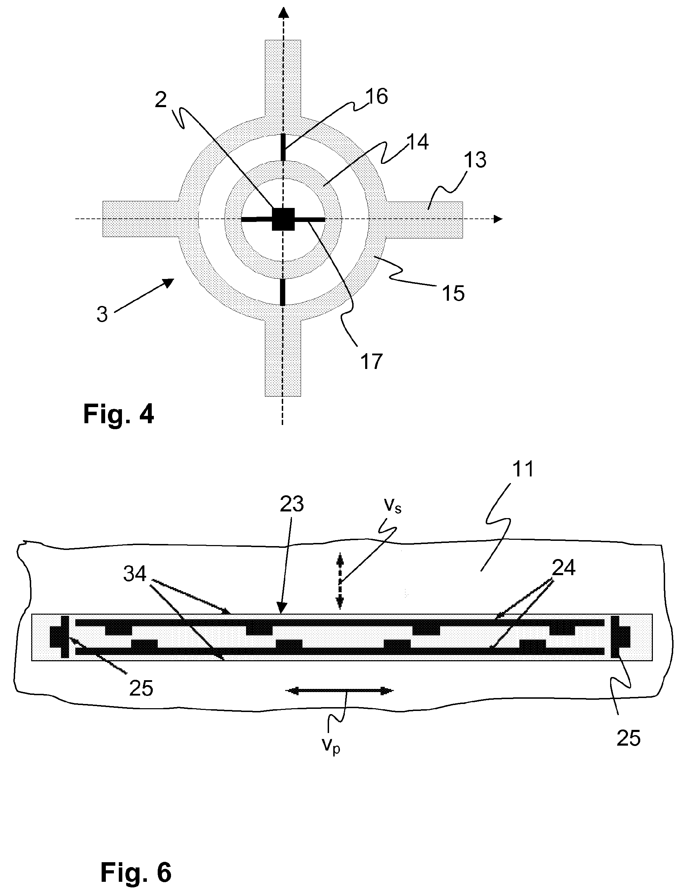

In Figur 4 ist ein Ausführungsbeispiel der inneren Aufhängung 3 gezeigt. Zwei - hier ringförmige -Rahmen 14, 15 werden durch ein Paar Torsionsfedern 16 miteinander und der innere Rahmen 14 mit einem Paar Torsionsfedern 17 mit dem zentralen Anker 2 verbunden. Vom äußeren Rahmen 15 der inneren Aufhängung 3 zweigen die vier Streben 13 zu den Federn der Massen 4 der ersten Gruppe ab. Die Massen 5 der zweiten Gruppe sind nicht mit der inneren Aufhängung 3 verbunden.

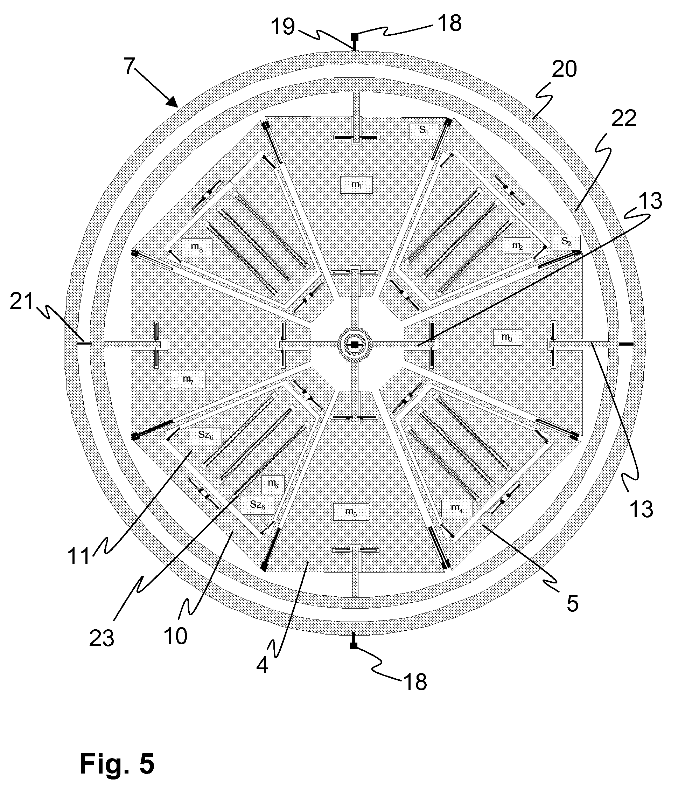

Gemäß Figur 5 kann eine äußere Aufhängung 7 analog zur inneren ebenfalls als Kardanaufhängung ausgeführt werden mit dem Unterschied, dass der innere, zentrale Anker 2 durch zwei äußere Anker 18 an den Torsionsfedern 19 des äußeren Rahmens 20 ersetzt wird. Der äußere Rahmen 20 der äußeren Aufhängung 7 ist mittels einer Torsionsfeder 21 mit einem inneren Rahmen 22 verbunden. An dem inneren Rahmen 22 sind die Stege 13 der Massen 4 der ersten Gruppe befestigt.

Figuren 5 und 6 zeigen eine mögliche Ausführungsform der Detektionskapazitäten für die Erfassung der Bewegung senkrecht zur radialen Antriebsbewegung der Massen 5 der zweiten Gruppe. Die gemäß Figur 2, 5 oder 7 in den Antriebsrahmen 10 elastisch in senkrecht zum Radius stehender Richtung eingebetteten Unterteilmassen 11 weisen Detektionsboxen 23 auf. Diese sind nach Fig. 6 einfache Aussparungen in der Unterteilmasse 11, deren inneren Wänden, welche Elektroden 34 der bewegten Teilmassen 11 darstellen, auf dem Substrat isoliert verankerte Gegenelektroden 24 gegenüberstehen, so dass Bewegungen der Detektionsbox 23 in Richtung der Sekundärbewegung Vₛ, senkrecht zum Radius, zu Kapazitätsänderungen führen, die gemessen werden. Zur Vermeidung des Einflusses der radialen Primärbewegung vₚ über die sich ändernden Randfelder rechts und links in der Box 23 können Abschirmelektroden 25 verwendet werden, die das gleiche Potential wie die bewegte Masse 11 aufweisen und damit konstante Randfelder garantieren.

Derartige Detektionsboxen 23 können selbstverständlich auch in Sensorelementen ohne Unterteilmasse 11 verwendet werden. Durch die Abschirmelektroden 25 werden auch hier Störungen bei der Messung von Sekundärbewegungen vermieden.

Der Sensor 1 ist in bekannter Micro-Machining-Technik hergestellt. Ein wesentliches Merkmal der Erfindung sind zwei Gruppen von angetriebenen Massen 4 und 5, wobei jede der zwei Gruppen vier oder mehr Einzeimassen enthält.

Alle Massen 4, 5 werden synchron angetrieben, wobei jede der Massen 4, 5 der beiden Gruppen seine Drehbewegung unter dem Einfluss externer Drehgeschwindigkeiten in unterschiedliche Richtungen verändert.

Je ein Massenpaar 4 der ersten Gruppe führt eine synchrone Sekundärbewegung aus, deren Resonanzfrequenzen vorteilhafterweise möglichst identisch sein und in der Nähe der gemeinsamen Primärresonanz aller Massen liegen sollte. Die Primärresonanz der Massen 5 der zweiten Gruppe ist vorteilhafterweise ebenfalls in die Nähe der gemeinsamen Primärresonanz zu legen.

Die Sekundärresonanzen der Massen 5 der zweiten Gruppe müssen nicht synchronisiert sein. Gleiches gilt für die Übereinstimmung der beiden Sekundärresonanzen der Paare der ersten Gruppe. Eine im Rahmen der Fertigungstoleranzen erreichbare annähernde Übereinstimmung ist ausreichend für eine stabile Gesamtempfindlichkeit gegenüber Drehungen um alle drei Achsen.

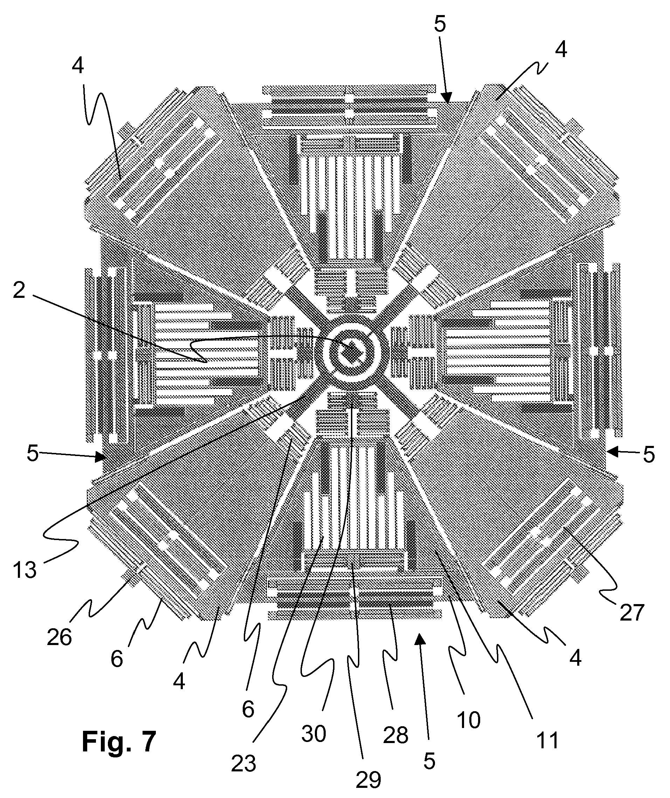

In Figur 7 ist ein weiteres Ausführungsbeispiel der Erfindung dargestellt. Hierbei werden die Massen 4 der ersten Gruppe nicht mittels eines äußeren Rahmens miteinander verbunden. Jede der Massen 4 der ersten Gruppe ist hingegen mittels eines Ankers 26 und der Strebe 13 auf dem Substrat befestigt. Die Federn 6, welche die Massen 4 an dem Anker 26 und der Strebe 13 befestigen, erlauben eine Antriebsbewegung in oszillierender radialer Richtung in Bezug auf den zentralen Anker 2, darüber hinaus eine Bewegung aus der x-, y-Ebene heraus, insbesondere eine Kippbewegung um den zentralen Anker 2. Die Massen 4 der ersten Gruppe werden mittels Antriebselektroden 27 in ihre Primärbewegung versetzt. Antriebselektroden 28 bewegen den Antriebsrahmen 10 der Massen 5 der zweiten Gruppe ebenfalls oszillierend in radialer Richtung in Bezug auf den zentralen Anker 2. Der Antriebsrahmen 10 ist mittels eines äußeren Ankers 29 und eines inneren Ankers 30 auf dem Substrat radial beweglich befestigt. Die Bewegung der Teilmasse 11, welche quer zur Antriebsrichtung des Antriebsrahmens 10 elastisch gelagert ist, wird mittels der Detektionsbox 23 festgestellt.

Die vorliegende Erfindung ist nicht auf die dargestellten Ausführungsbeispiele beschränkt. Es sind andere Ausführungen im Rahmen des Wortlautes der Patentansprüche und der Beschreibung möglich. Auch Kombinationen der Ausführungen einzelner Bauteile der Ausführungsbeispiele sind jederzeit untereinander möglich.

## Patentansprüche

1. Mikro-Gyroskop, insbesondere zur Ermittlung von Rotationsbewegungen um eine x- und/oder y- und/oder z-Achse
mit einem Substrat,
mit mehreren oszillierenden Massen (4, 5),
mit Federn zum Befestigen der oszillierenden Massen (4, 5) an dem Substrat,
mit Antriebselementen, vorzugsweise Elektroden, insbesondere Gabelelektroden, zum oszillierenden Schwingen zumindest einzelner der Massen (4, 5) in radialer Richtung zu einem zentralen Anker (2) in der x-y-Ebene, um bei einer Drehung des Substrats Corioliskräfte zu erzeugen und
mit Sensorelementen, um Auslenkungen der Massen (4, 5) insbesondere aufgrund der erzeugten Corioliskräfte zu erfassen,
**dadurch gekennzeichnet,**
**dass** zumindest einzelne der Massen (4, 5) in zwei Gruppen angeordnet sind, wobei einige der Massen (4) einer ersten Gruppe und andere der Massen (5) einer zweiten Gruppe zugeordnet sind,
**dass** die Massen (4, 5) beider Gruppen durch die Antriebselemente gemeinsam zu einer oszillierenden Primärbewegung in radialer Richtung zu dem zentralen Anker (2) in der Ebene der x-/y-Achse angeregt werden können,
und die einzelnen Massen (4, 5) aufgeteilt sind auf jeweilige Sekundärbewegungen, welche als Reaktion der Corioliskräfte gemessen werden sollen,
**dass** die Massen (4) der ersten Gruppe derart auf dem Substrat angeordnet sind, dass sie als Sekundärbewegung Bewegungen aus der x-/y-Ebene heraus ermöglichen,
**dass** die Massen (5) der zweiten Gruppe derart auf dem Substrat angeordnet sind, dass sie als Sekundärbewegung Bewegungen senkrecht zu der oszillierenden Primärbewegung in der Ebene der x-/y-Achse ermöglichen.

2. Mikro-Gyroskop nach einem oder mehreren der vorherigen Ansprüche, **dadurch gekennzeichnet, dass** die Massen (4, 5) der ersten und der zweiten Gruppe zur synchronisierten oszillierenden Primärbewegung elastisch miteinander verbunden sind.

3. Mikro-Gyroskop nach einem oder mehreren der vorherigen Ansprüche, **dadurch gekennzeichnet, dass** die Massen (4) der ersten Gruppe zwei Paare von Massen (4) sind, die auf der x- und der y-Achse angeordnet sind.

4. Mikro-Gyroskop nach einem oder mehreren der vorherigen Ansprüche, **dadurch gekennzeichnet, dass** die zweite Gruppe aus mindestens zwei Massen (5) oder vorzugsweise aus einem Vielfachen davon besteht.

5. Mikro-Gyroskop nach einem oder mehreren der vorherigen Ansprüche, **dadurch gekennzeichnet, dass** die Massen (5) der zweiten Gruppe zwischen den Massen (4) der ersten Gruppe, insbesondere jeweils um 90° versetzt angeordnet sind.

6. Mikro-Gyroskop nach einem oder mehreren der vorherigen Ansprüche, **dadurch gekennzeichnet, dass** die Massen (4) der ersten Gruppe in x- und/oder y-Richtung flexibel an einem inneren und/oder einem äußeren Rahmen (14, 15; 20, 22) angeordnet sind.

7. Mikro-Gyroskop nach einem oder mehreren der vorherigen Ansprüche, **dadurch gekennzeichnet, dass** die Massen (4) der ersten Gruppe in radialer Richtung flexibel an einer starren Strebe (13) oder einem Hilfssteg angeordnet sind.

8. Mikro-Gyroskop nach einem oder mehreren der Ansprüche 6, 7, **dadurch gekennzeichnet, dass** der innere Rahmen (14) an einem oder mehreren, im Wesentlichen zentralen Anker/n (2) angeordnet ist.

9. Mikro-Gyroskop nach einem oder mehreren der Ansprüche 6-8, **dadurch gekennzeichnet, dass** der innere und/oder der äußere Rahmen (14, 15; 20, 22) kardanisch an einem oder mehreren Anker/n (2; 18) zur Kippbewegung der Massen (4) der ersten Gruppe um die x- und/oder y- Achse gelagert ist.

10. Mikro-Gyroskop nach einem oder mehreren der Ansprüche 6-9, **dadurch gekennzeichnet, dass** die kardanische Lagerung des inneren und äußeren Rahmens (14, 15; 20, 22) flexibel um die gleichen Kippachsen ist, aber gegenüber linearen Bewegungen weitgehend unbeweglich ist.

11. Mikro-Gyroskop nach einem oder mehreren der vorherigen Ansprüche, **dadurch gekennzeichnet, dass** zumindest Teile der Massen (5) der zweiten Gruppe drehbar um die z-Achse oder senkrecht zur radialen Anordnung auslenkbar gelagert sind.

12. Mikro-Gyroskop nach einem oder mehreren der vorherigen Ansprüche, **dadurch gekennzeichnet, dass** Massen (5) der zweiten Gruppe einen oszillierenden Rahmen (10) und eine damit verbundene Unterteilmasse (11) aufweist und die Unterteilmasse (11) an dem oszillie-, renden Rahmen (10) vorzugsweise derart befestigt ist, dass die Unterteilmasse (11) senkrecht zur oszillierenden Bewegung des Rahmens (10) auslenkbar ist.

13. Mikro-Gyroskop nach einem oder mehreren der vorherigen Ansprüche, **dadurch gekennzeichnet, dass** erste Sensorelemente zum Erfassen der Auslenkung der oszillierenden Massen (4) der ersten Gruppe unterhalb der oszillierenden Massen (4) angeordnet sind und/oder zweite Sensorelemente zum Erfassen der Auslenkung der Massen (5) oder der Unterteilmassen (11) der zweiten Gruppe vorgesehen sind.

14. Mikro-Gyroskop, insbesondere nach einem oder mehreren der vorherigen Ansprüche, **dadurch gekennzeichnet, dass** Sensorelemente zum Erfassen der Auslenkung der Massen (5) oder der Unterteilmassen (11) in einer Detektionsbox (23) mit Abschirmelektroden (25) für auf dem Substrat feststehende Gegenelektroden (24) angeordnet sind.

## Claims

1. A micro-gyroscope, particularly for determining rotational motions about an X and/or Y and/or Z axis,
having a substrate,
having a plurality of oscillating sample masses (4, 5),
having springs for attaching the oscillating masses (4, 5) to the substrate,
having drive elements, preferably electrodes, particularly fork electrodes, for oscillating at least some of the masses (4, 5) in the radial direction relative to a central armature (2) in the X-Y plane in order to produce Coriolis forces during rotation of the substrate, and
having sensor elements in order to detect deflections of the masses (4, 5) particularly due to the Coriolis forces generated,
**characterized in that**,
at least some of the masses (4, 5) are disposed in two groups, wherein some of the masses (4) are associated with a first group and others of the masses (5) are associated with a second group,
that the masses (4, 5) of both groups can be excited by the drive elements jointly to a primary oscillating motion in the radial direction relative to a central armature (2) in the plane of the X axis / Y axis,
and the individual masses (4, 5) are distributed among corresponding secondary motions to be measured as a reaction to the Coriolis forces,
that the masses (4) of the first group are disposed on the substrate so as to allow motions out of the X-Y plane as secondary motions,
that the masses (5) of the second group are disposed on the substrate so as to allow motions perpendicular to the primary oscillating displacement in the plane of the X axis / Y axis as secondary motions.

2. The micro-gyroscope according to any one or more of the preceding claims, **characterized in that** the masses (4, 5) of the first and the second group are elastically connected to each other for synchronized oscillating primary motion.

3. The micro-gyroscope according to any one or more of the preceding claims, **characterized in that** the masses (4) of the first group are two pairs of masses (4) disposed on the X axis and the Y axis.

4. The micro-gyroscope according to any one or more of the preceding claims, **characterized in that** the second group consists of at least two masses (5) or preferably a multiple thereof.

5. The micro-gyroscope according to any one or more of the preceding claims, **characterized in that** the masses (5) of the second group are disposed between the masses (4) of the first group, particularly offset by 90° in each case.

6. The micro-gyroscope according to any one or more of the preceding claims, **characterized in that** the masses (4) of the first group are disposed flexibly on the X and/or Y direction on an inner and/or an outer frame (14, 15; 20, 22).

7. The micro-gyroscope according to any one or more of the preceding claims, **characterized in that** the masses (4) of the first group are disposed flexibly in the radial direction on a rigid bar (13) or an auxiliary web.

8. The micro-gyroscope according to any one or more of the claims 6, 7, **characterized in that** the inner frame (14) is disposed on one or more substantially central armatures (2).

9. The micro-gyroscope according to any one or more of the claims 6-8, **characterized in that** the inner and/or the outer frame (14, 15; 20, 22) is gimbal mounted on one or more armatures (2; 18) for a tilting motion of the masses (4) of the first group about the X axis and/or the Y axis.

10. The micro-gyroscope according to any one or more of the claims 6-9, **characterized in that** the gimbal mount of the inner and outer frames (14, 15; 20, 22) is flexible about the same tilt axis, but is largely immobile with respect to linear motions.

11. The micro-gyroscope according to any one or more of the preceding claims, **characterized in that** at least part of the masses (5) of the second group are rotationally supported for deflecting about the Z axis or perpendicular to the radial arrangement.

12. The micro-gyroscope according to any one or more of the preceding claims, **characterized in that** the masses (5) of the second group comprise an oscillating frame (10) and a subdivide mass (11) connected thereto, and the subdivide mass (11) is preferably attached to the oscillating frame (10) such that the subdivide mass (11) can be deflected perpendicular to the oscillating motion of the frame (10).

13. The micro-gyroscope according to any one or more of the preceding claims, **characterized in that** first sensor elements for detecting the deflection of the oscillating masses (4) of the first group are disposed below the oscillating masses (4) and/or second sensor elements for detecting the deflection of the masses (5) or the subdivide masses (11) of the second group are provided.

14. The micro-gyroscope particularly according to any one or more of the preceding claims, **characterized in that** sensor elements for detecting the deflection of the masses (5) or the subdivide masses (11) are disposed in a detection box (23) having shielding electrodes (25) for counter electrodes (24) fixed to the substrate.

## Revendications

1. Micro-gyroscope, en particulier pour déterminer des mouvements de rotation autour d'un axe x et/ou y et/ou z,
avec un substrat,
avec plusieurs masses (4, 5) oscillantes,
avec des ressorts pour la fixation des masses oscillantes (4, 5) sur le substrat,
avec des éléments d'entraînement, de préférence des électrodes, en particulier des électrodes en fourche, pour l'oscillation d'au moins certaines masses individuelles des masses (4, 5) dans le sens radial vers un ancre central (2) dans le plan (x, y), pour générer des forces de Coriolis en cas de rotation du substrat, et
avec des éléments capteurs pour capter les déviations des masses (4, 5) en particulier en raison des forces de Coriolis générées,
**caractérisé en ce que**
certaines au moins des masses (4, 5) sont agencées en deux groupes, sachant que certaines des masses (4) appartiennent à un premier groupe et d'autres des masses (5) appartiennent à un second groupe, que les masses (4, 5) des deux groupes peuvent être excitées communément par les éléments d'entraînement en un mouvement oscillant primaire dans le sens radial, vers l'ancre central (2) dans le plan de l'axe x/y,
et les masses individuelles (4, 5) sont réparties sur des mouvements secondaires respectifs, lesquels doivent être mesurés en tant que réaction aux forces de Coriolis,
que les masses (4) du premier groupe sont agencées sur le substrat de manière à permettre des mouvements depuis le plan x/y en tant que mouvement secondaire,
que les masses (5) du second groupe sont agencées sur le substrat de manière à permettre en tant que mouvement secondaire des mouvements perpendiculaires au mouvement primaire oscillant dans le plan de l'axe x/y.

2. Micro-gyroscope selon l'une ou plusieurs des revendications précédentes, **caractérisé en ce que** les masses (4, 5) du premier et du second groupe sont élastiquement reliées les unes avec les autres en vue d'un mouvement primaire oscillant synchronisé.

3. Micro-gyroscope selon l'une ou plusieurs des revendications précédentes, **caractérisé en ce que** les masses (4) du premier groupe sont deux paires de masses (4), qui sont disposées sur l'axe x et sur l'axe y.

4. Micro-gyroscope selon l'une ou plusieurs des revendications précédentes, **caractérisé en ce que** le second groupe se compose au moins de deux masses (5) ou, de préférence, d'un multiple de ce chiffre.

5. Micro-gyroscope selon l'une ou plusieurs des revendications précédentes, **caractérisé en ce que** les masses (5) du second groupe sont disposées entre les masses (4) du premier groupe, en particulier décalées respectivement de 90°.

6. Micro-gyroscope selon l'une ou plusieurs des revendications précédentes, **caractérisé en ce que** les masses (4) du premier groupe sont disposées de manière souple dans le sens x et/ou y sur un cadre intérieur et/ou extérieur (14, 15 ; 20, 22).

7. Micro-gyroscope selon l'une ou plusieurs des revendications précédentes, **caractérisé en ce que** les masses (4) du premier groupe sont disposées dans le sens radial de manière souple sur un croisillon rigide (13) ou sur une traverse auxiliaire.

8. Micro-gyroscope selon l'une ou plusieurs des revendications 6 ou 7, **caractérisé en ce que** le cadre intérieur (14) est disposé sur un ou plusieurs ancre(s) (2) essentiellement central/centraux.

9. Micro-gyroscope selon l'une ou plusieurs des revendications 6-8, **caractérisé en ce que** le cadre intérieur et/ou le cadre extérieur (14, 15 ; 20, 22) est/sont monté(s) à la cardan sur un ou plusieurs ancre(s) (2 ; 18) en vue du mouvement de basculement des masses (4) du premier groupe autour de l'axe x et/ou y.

10. Micro-gyroscope selon l'une ou plusieurs des revendications 6-9, **caractérisé en ce que** le montage à la cardan des cadres intérieur et extérieur (14, 15 ; 20, 22) est souple autour des mêmes axes de basculement, mais quasiment immobile par rapport à des mouvements linéaires.

11. Micro-gyroscope selon l'une ou plusieurs des revendications précédentes, **caractérisé en ce que** des parties au moins des masses (5) du second groupe sont montées de manière rotative autour de l'axe z ou déviable perpendiculairement à la disposition radiale.

12. Micro-gyroscope selon l'une ou plusieurs des revendications précédentes, **caractérisé en ce que** des masses (5) du second groupe comportent un cadre oscillant (10) et une masse subdivisée (11) reliée avec ce dernier et la masse subdivisée (11) est fixée sur le cadre oscillant (10) de préférence de sorte que la masse subdivisée (11) soit déviable perpendiculairement au mouvement oscillant du cadre (10).

13. Micro-gyroscope selon l'une ou plusieurs des revendications précédentes , **caractérisé en ce que** des premiers éléments capteurs sont disposés sous les masses oscillantes (4) pour la détection de la déviation des masses oscillantes (4) du premier groupe et/ou des seconds éléments capteurs sont prévus pour la détection de la déviation des masses (5) ou des masses subdivisées (11) du second groupe.

14. Micro-gyroscope, en particulier selon l'une ou plusieurs des revendications précédentes, **caractérisé en ce que** des éléments capteurs pour la détection de la déviation des masses (5) ou des masses subdivisées (11) sont disposés dans un coffret de détection (23) avec des électrodes écrans (25) pour des contre-électrodes (24) montées à demeure sur le substrat.
